(19) Europäisches Patentamt
European Patent Office
Office européen des brevets

(11) **EP 3 557 533 A1**

(12) **EUROPEAN PATENT APPLICATION**

(43) Date of publication:
**23.10.2019 Bulletin 2019/43**

(51) Int Cl.:
***G06T 15/20*** (2011.01)      ***G06T 19/00*** (2011.01)

(21) Application number: **18168625.4**

(22) Date of filing: **20.04.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Barco N.V.**
**8500 Kortrijk (BE)**

(72) Inventors:
• **GEORGE, Paul Hubert André**
  **59136 Wavrin (FR)**
• **GRILLET, Augustin Victor Louis**
  **59163 Condé sur l Escaut (FR)**
• **VANDAMME, Wim Alois**
  **8470 Gistel (BE)**

(74) Representative: **IPLodge bvba**
**Technologielaan 9**
**3001 Heverlee (BE)**

(54) **METHOD AND APPARATUS FOR PERSPECTIVE ADJUSTMENT OF IMAGES FOR A USER AT DIFFERENT POSITIONS**

(57) A method for generating a second virtual object from a first virtual object, said second virtual object being projected on a projection screen, wherein the first virtual object is determined for a user in a first position, and wherein the second virtual object is determined for a user in a second position, different from the first known position, the position of the second virtual object being determined by applying the intercept theorem. Once the second virtual object has been determined, the method further comprises the step of generating image data for the second virtual object, rendering the second virtual object by projecting the image data on the projection screen.

Figure 5

**Description**

**Field of the Invention**

The present invention relates to the projection (or display) of images with perspective adjustments for users being in different positions and to methods for providing such perspective adjustments and to software for carrying out the methods.

**Discussion of the prior art.**

To highlight the differences between the present invention and the prior art, reference will be made a.o. to the Waller Flexible Gunnery Trainer where one or more gunners learns to operate a machine gun by shooting at images of planes projected on a curved projection screen. The Waller Flexible Gunnery Trainer is described in detail in US2406574 "Gunnery Training".

In a Waller Flexible Gunnery Trainer as illustrated on figure 1 (which corresponds to figure 13 of US2406574 "Gunnery Training"), the gunners sit in 2 or more positions about a cluster of projectors (20) which throw pictures of attacking planes on a spherical screen (21). Preferably the projectors are arranged behind the geometric center C of the spherical screen and have their optical axes located on radii through the center C. Composite of images covers e.g. 150° horizontally, 75° vertically. Both free and turret dummy guns (25) can be used. An instructor has a score board in front of him that counts the number of hits by each gun. Registers operate the score boards, and send signal to gunner's earphones when the gunner hits.

A dummy gun can swing in azimuth and zenith. An opto-mechanical hit recording mechanism follows the azimuth and zenith of the dummy gun and determines whether or not the gunner operating that dummy gun has hit a plane of which images are projected on the spherical screen 21.

The gunners manning the dummy guns can see the same content projected on screen. As was the case with most military simulators of the prior art, the perspective of the images being projected looks correct as long as the gunners are not positioned too far away from a sweet spot. The sweet spot is typically the center C of the spherical screen.

Alternatively, as described in US5137450 "Display for advanced research and training (DART) for use in a flight simulator and the like", active glasses can be used to guarantee that a viewer will only see images projected to the attention of that viewer occupying a given position.

US5137450 describes a display system where an image generator can generate eight different video images, each image being the appropriate view out a particular window for a predetermined design eye-point. The Image generator can also generate eight similar video images, but for a different predetermined design eye-point. In a conventional video raster display of a video image, only every other raster line is transmitted with each so-called field, so that a full so-called frame comprises two successively transmitted fields. The alternating fields, which make up the so-called interlaced video display, are alternately transmitted rapidly enough so that the display is viewed as normal by the human eye without flicker. In the system illustrated on Figur 2 (which corresponds to figure 6 of US5137450), each field is the video image for a different design eye-point and is generated by the image generator. Each of two simulator crewmembers, sitting, for example, side-by-side in a slightly larger radius or elliptically shaped simulator enclosure, wear glasses 72 and 74 that rapidly switch on and off in synchronization with each of the two separate fields so that each crewmember sees only the geometrically correct view intended for his or her design eye-point. A computer or controller 70 controls either or both of image generator and glasses 72 and 74 to synchronize the images and glasses.

The system described in US5137450 present disadvantages. As the number of crewmembers requiring a different perspective increases, the brightness of the images seen by each crewmember will decrease unless the number of projectors and/or their lumen output is increased. It is also necessary to increase the frequency at which the images corresponding to different perspectives are projected to avoid flickering. Furthermore, the system described does not allow a crewmember to move in the display system and still see the correct perspective.

Since the advent of virtual and augmented reality, it is possible to virtualize dummy guns as well as the image of the projectiles fired by the dummy guns and/or other pieces of equipment that may be required for training. If virtual or augmented reality goggles were used, each gunner would see the dummy guns with the correct perspective for each of their position even if that position changes during the simulation.

When VR / AR goggles are not available or not economically justifiable, passive stereoscopic glasses can be used. In that case, the same images being displayed on screen for all gunners, perceiving the correct perspective will be impossible for all gunners (in particular for images of objects that will appear very close to the gunners like e.g. the dummy guns and the projectiles being fired).

Regardless of the technique used for generating images that will be seen with the geometrically correct view, computing new images for every position of a crewmember is resource intensive.

The approaches of the prior art may not be applicable to simpler systems that nevertheless require each user to enjoy an as geometrically correct view regardless of the position.

There is a need for improvement in the art.

**Summary of the Invention**

According to an aspect of the present invention, there is provided a method for generating a second virtual object from a first virtual object, said second virtual object being displayed on a display device or projected on a projection screen, the method being executed by an image generator in a projection system or in a display system further comprising means to detect the position of a user, wherein the first virtual object is determined for a user in a first known position, and wherein the second virtual object is determined for a user in a second position, different from the first known position, the method comprising the steps of

determining the second position of the user with the means to detect the position of a user,

- for each vertex V of the first virtual object,

  ○ determining the intersection I between the display device or projection surface and the straight line intersecting position E and vertex V,

  ○ determining the vertex V' of the second virtual object, along the straight line intersecting position E' and intersection I, such that using the intercept theorem,

$$\| IV' \| = \| IE' \| * \| IV \| / \| IE \|$$

- generating image data for the second virtual object,
- rendering the second virtual object by projecting the image data on the projection screen or by displaying it on the display device.

Advantageously, the correction is done with respect to a first position, or a "reference" as the display system or projection system projects images according to a given geometry (e.g. for 3D cinema in front of the screen, along the axis of symmetry and about 2/3 of the way between screen and back of the room).

Using a simple formula, the perspective of a virtual object can be adjusted according to the position of the user. The method of the present invention does not require the use of additional complex hardware. Thus, existing systems require little or no modifications for adjusting the perception of virtual objects, furthermore, the present invention is scalable to any size, and the c computational load only requires the readjustment of the coordinates of the virtual objects.

Advantageously, the first position (E') is a sweet spot of the projection system or display system.

In one embodiment, the method is applied

- for a second position EL which corresponds to the position of the left eye of a user and
- a third position ER which corresponds to the position of the right eye of a user,

such that the method generates a stereoscopic image of the second virtual object.

Advantageously, the method of the present invention can be used for generating stereoscopic images.

In another embodiment of the present invention, the determination of the second virtual object is performed with a shader, said shader receiveing the coordinates of the first virtual object and the second position E of the user. Using a shader improves the computational time.

In an embodiment of the present invention, the second virtual object is displayed over a background image, said background image being identical for all positions of a user. Advantageously, the images can be considered as having two components, a background which is independent of the viewpoint and a second part which depends on the view point.

The solution proposed does not increase the processing power drastically as it can be only applied to virtual objects, and not to the entire image. Furthermore, the use of a shader still improves the computing power.

With this technique, a point of view is specifically rendered for each user, or in stereoscopic 3D: for each eye. There is no distortion in the rendering and a true matching between real and virtual world is provided. The present invention offers a simple software solution which is very efficient.

By only applying the method to virtual objects over a background, the visualization of close content is improved, and thus again, the processing power is not an issue.

Thus, an additional possibility with the present invention, is further to correct the rendering for close objects only, depending on who is supposed to view it and interact with it.

Thus, the shader of the present invention can be applied specifically to certain objects and for a plurality of simultaneous users in a 3D environment, as for example in a dome.

In embodiments of the present invention, the projection screen or the display device is flat, cylindrical, polyhedral or is a dome or a portion of a dome.

The method of the present invention is independent of the type of projection screen or display used. It can advantageously be applied in a dome type display which provides a user an immersive experience. With the correction of the present invention, this immersion experience is improved as the rendering of close objects is corrected and the possibility to interact with these objects is now possible.

For the embodiments according to the present invention comprising a projection system, the projection system can be a front projection or a rear projection, and the projection system comprises at least one projector.

In embodiments of the present invention, the means to detect the position of a user are any one of a webcam, a digital camera, a Kinect® system, head trackers, etc.

Aspects of the present invention also pertain to a method for determining interaction between a user and a virtual object, said virtual object being displayed on a display device or projected on a projection screen, the method being applied by an image generator in a projection system or in a display system comprising means to detect the position of a user, the user being in a second position E and the virtual object B being displayed for a person in a first position E', the user at position E interacting with the virtual object with a body member, the method comprising the steps of

- determining with the means to detect the position of a user 124 the position of the body member 123 of the user at position E,

- determining the intersection J between the display device or projection surface and the straight-line intersecting position E and virtual object B,

    (1) determining a second position PP of the virtual object B, as seen by the user in E, as being along the straight-line intersecting position E and intersection J, and on the line parallel to EE' and intersecting the position B, such that using the intercept theorem: $\| J\text{-}PP \| = \| JE \| * \| JB \| / \| JE' \|$,

    (2) or determining a second position V of the body member H of the user, such that the coordinates of the point V are such that $\| JV \| = \| \mathbf{JE'} \| * \| \mathbf{JH} \| / \| \mathbf{JE} \|$.

- for (1), comparing the second position PP of the virtual object with the position of the body member of the user at position E to determine if there is an interaction between the virtual object at B with the body member of the viewer at E,

- for (2), comparing the second position V of the body member with the position of the virtual object at B to determine if there is an interaction between the virtual object at B with the body member of the viewer at E.

For objects which are meant to be seen and manipulated by multiple users, the reverse operation is done with respect to the first aspect of the present invention, and only the matching between the second position of the virtual object or the second position of the body member and the virtual position is determined to evaluate when an interaction occurs.

Users can thus also interact in a projection system, as for example a dome. This adjustment to determine interaction also requires little processing power and can thus be implemented on a CPU, or the image generator. The method of the present invention further provides advantages which allow multi-user activity, for example in a dome.

Advantageously, the first position (E') is a sweet spot of the projection system or display system.

The present invention also pertains to a projection system comprising at least one projector, means to detect the position of a user, and an image generator configured to execute the steps of the methods according to the present invention.

The present invention also pertains to a display system comprising at least one display, means to detect the position of a user, and an image generator configured to execute the steps of the methods according to the present invention.

The present invention further pertains to a computer program product comprising software which when executed on one or more processing engines, performs any of the methods above.

The present invention also pertains to a computer-readable medium having stored thereon the computer program.

The technical effects and advantages of embodiments of according to the present invention correspond *mutatis*

*mutandis* to those of the corresponding embodiments of the method according to the present invention.

**Brief Description of the Figures**

These and other technical aspects and advantages of embodiments of the present invention will now be described in more detail with reference to the accompanying drawings, in which:

Figure 1 corresponds to Figure 13 of patent application US2406574 "Gunnery Training"

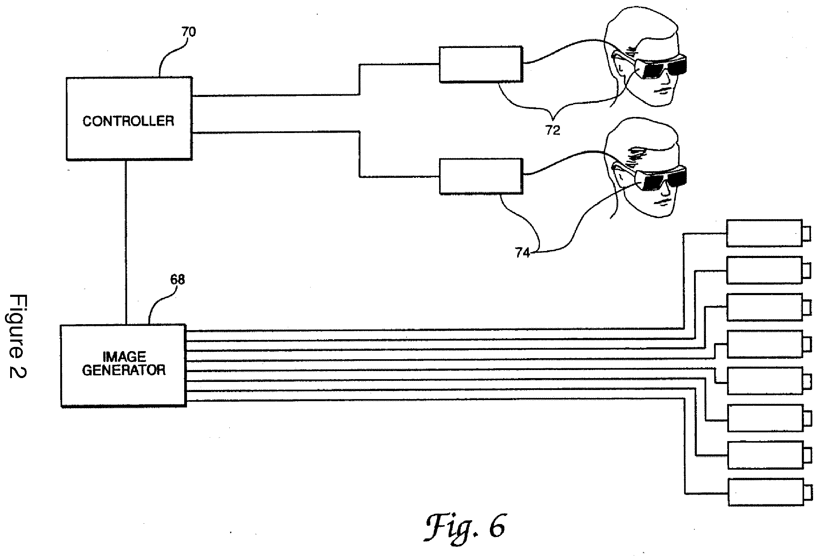

Figure 2 corresponds to Figure 6 of US5137450. Figure 3A is a schematic illustration which illustrates how a ray of light intersects with a projection screen in front of a projector in function of the state of micro-mirrors on a reflective spatial light modulator.

Figure 3B is the same schematic illustration as Figure 3A but for a different micro-mirror.

Figure 4 is a top view of a projection system comprising a projector, a according to the invention.

Figure 5 is a schematic representation which illustrates how a virtual object {V1', V2', V3', V4'} is determined in function of the virtual object {V1, V2, V3, V4} and the position of the viewer E outside of the sweet spot E', according to the present invention.

Figure 6 is a flow diagram which illustrates the steps or operations to be carried out to determine the image V' of a vertex V in function of the position E of a viewer, where V is a vertex of a first Virtual Object and V' is a vertex of a second Virtual Object, according to the present invention.

Figure 7 is a diagram which illustrates the principle of the method of the present invention for stereoscopic images.

Figure 8 is a top view of a projection system according to another embodiment of the invention.

Figure 9 is similar to Figure 4 but for a dome type projection screen, according to an embodiment of the present invention.

Figure 10 is similar to Figure 5 but for a dome type projection screen, according to an embodiment of the present invention.

Figure 11 is an example of shader written following the Shaderlab syntax (ShaderLab is a declarative language used to write shader files with the Unity editor (© 2018 Unity Technologies).

Figure12 is a schematic representation of another embodiment of the present invention showing a situation where two users in different positions interact with a same object.

Figure 13 illustrates a transformation of coordinates for the embodiment shown in Figure 12 according to the present invention.

**Definition and Acronyms.**

**Anaglyph / Anaglyphic.** a stereoscopic motion or still picture in which the right component of a composite image usually red in color is superposed on the left component in a contrasting color to produce a three-dimensional effect when viewed through correspondingly colored filters in the form of spectacles. See also stereoscopy / stereoscopic.

**Projection Dome.** Also, merely "Dome". A curved screen especially a polygonal, cylindrical or spheroidal projection screen. Screen having an angle of curvature greater than 180° such as a wrap-around cylindrical or dome screen. A domed screen can be a polygonal, cylindrical or spheroidal or spherical projection screen). For example, the viewing space inside a dome such as a sphere can have a field of view is theoretically $0 \leq \theta \leq 2\pi$ and $2 \leq \varphi \leq 2\pi$ (usual spherical co-ordinates $(r, \theta, \varphi)$ with origin in the center of the sphere). The dome, e.g. sphere can have one section cut away (truncated) to provide an opening at the bottom and/or on the side. This can be used for access or a separate opening can be provided for access. In this case the field of view can be $0 \leq \theta \leq 2\pi$ and $0 > \varphi < 2\pi$ (usual spherical co-ordinates $(r, \theta, \varphi)$ with origin in the center of the sphere). Curved screen with a field of view that can be $0 \leq \theta \leq \pi$ and $0 > \varphi < \pi$. Such a screen can be used in a simulator of a ship's bridge for example, as the view out of the windows of the bridge can be limited, e.g. the roof prevents a view out in the vertical direction. Another example is a half-dome screen where the viewer only faces forwards. In this case the field of view can be $0 \leqq \theta \leqq \pi$ and $0 > \varphi < \pi$ (usual spherical co-ordinates $(r, \theta, \varphi)$ with origin in the center of the sphere).

**Perspective.** the appearance to the eye of objects in respect to their relative distance and positions.

**(Geometrical) ray / light ray.** The straight line or segment of line drawn between a first point representing e.g. the center of a pupil of a viewer and a second point representing e.g. a vertex of an object at which the viewer is looking.

**Quasi-Planar.** Having to some degree the qualities of a plane.

**Shader.** In computer graphics, a shader is a type of computer program that was originally used for shading (the production of appropriate levels of light, darkness, and color within an image) but which now performs a variety of specialized functions in various fields of computer graphics special effects or does video post-processing unrelated to shading, or even functions unrelated to graphics at all.

Shaders calculate rendering effects on graphics hardware with a high degree of flexibility. Most shaders are coded for a graphics processing unit (GPU), though this is not a strict requirement. Shading languages are usually used to program the programmable GPU rendering pipeline, which has mostly superseded the fixed-function pipeline that allowed only common geometry transformation and pixel-shading functions; with shaders, customized effects can be used. The position, hue, saturation, brightness, and contrast of all pixels, vertices, or textures used to construct a final image can be altered on the fly, using algorithms defined in the shader, and can be modified by external variables or textures introduced by the program calling the shader.

**Stereoscopy** / **stereoscopic.** Stereoscopic image displays, such as stereoscopic projection for example, are based on the same principle: two slightly different images, one for the left eye and one for the right eye, are displayed by some means, e.g. projected onto a screen. A corresponding image modulating system (e.g. filter glasses) enables the left eye to see only the left eye image, and the right eye to see only the right eye image. An example of stereoscopic projection system and the corresponding image modulating system is described in US7832869 "Method and device for performing stereoscopic image display based on color selective filters".

**Sweet spot.** Position or set of positions where a picture projected on a screen and in particular a spherical or curved screen will look natural (i.e. correct from a perspective or geometric point of view). Viewed from outside the sweet spot, the projected picture can look distorted. The rendering of images in a projection system or in a display system is calculated and thus optimized for the position of the sweet spot.

The set of positions at an optimal viewing distance from a display screen and/or optimal position with respect to a display screen define regions in space named sweet spots or also viewing spots, i.e. these regions located in front of a display device are regions where a user can perceive images on the screen with the correct perspective and/or without visual artefacts like e.g. but not limited to crosstalk between left eye images and right eye images.

The sweet spot can also be defined as the viewing position for which the display system was designed.

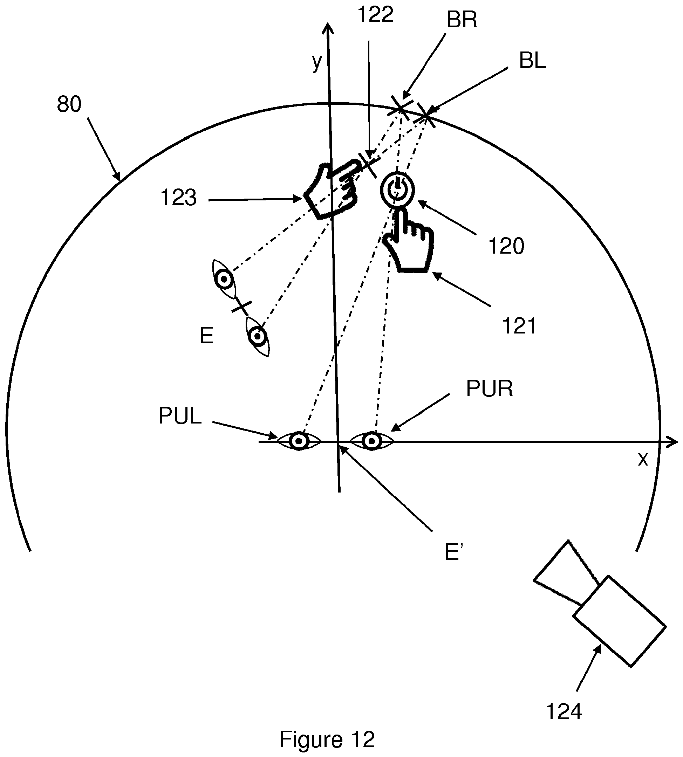

In the case of a display systems considered in this invention, the sweet spot concerns in particular the perspective of objects of which images are rendered on the display surface. In the example of figure 12, a right eye image and a left eye image of a point B are displayed. The point B is defined as a point of coordinates XB, YB, ZB. E' is (one of) the sweet spot because the point of intersection of a first light ray (or the straight line representing the ray of light) between the left eye image and the left pupil and a second light ray between the right eye image and the right pupil of a viewer at E'; intersect at a point P' of with coordinates XP', YP', ZP' with $|XP' - XP| < \Delta$; $|YP' - YP| < \Delta$; $|ZP' - ZP| < \Delta$ with $\Delta$ a real number. In an ideal case, $\Delta$ is equal to zero. In most cases, $\Delta$ will be chosen in function of a level of performance. When interacting with a 3D object $\Delta$ is preferably less than 25 cm or less than 10 cm or less than 5 cm or less than 1 cm.

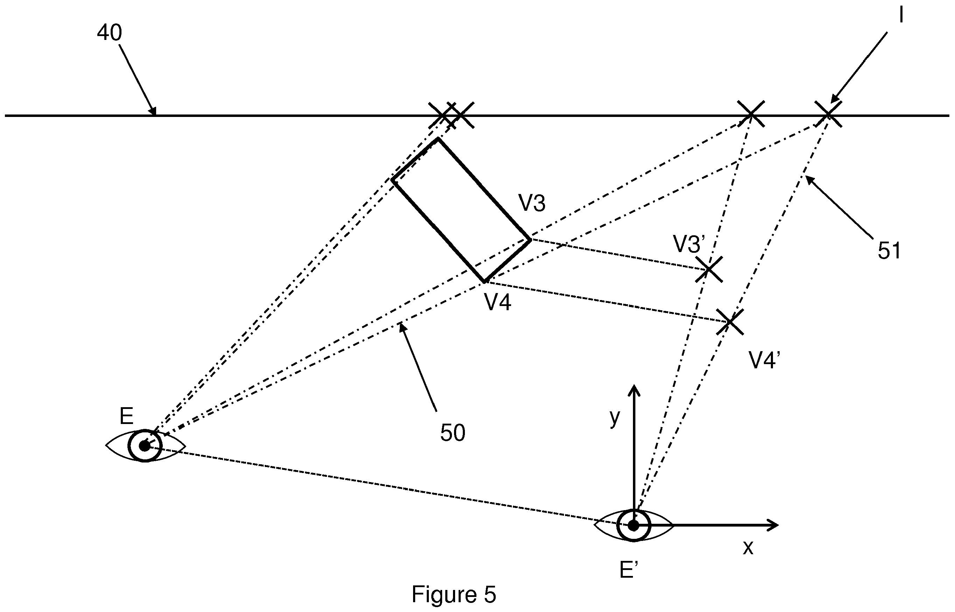

When one wants viewer to perceive rendered virtual objects with the correct geometry, the sweet spot can be defined based one or more criteria. A first criterion can be the "viewed and hidden". In the example of figure 5, a viewer at E should not be able to see the vertex V3 because an edge of the polygon obstructs the line of sight of a viewer at E. Nevertheless, an image of V3 is projected on screen and can be seen by a viewer at E. The viewer at E' is in a / the sweet spot because the relative position of the virtual object and the images of that virtual object projected on screen are compatible. For instance, a viewer at E' can see the vertex V3 of which images are projected on screen because no part of the virtual object obstructs the line of sight between V3 and E'.

**Unity®.** Unity is a cross-platform game engine developed by Unity Technologies® (© 2018 Unity Technologies), which is primarily used to develop both three-dimensional and two-dimensional videogames and simulations for computers, consoles, and mobile devices.

**Description of example of embodiments.**

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. Where the term "comprising" is used in the present description and claims, it does not exclude other elements or steps. Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

The terms "about" or "approximate" and the like are synonymous and are used to indicate that the value modified by the term has an understood range associated with it, where the range can be +20%, +15%, +10%, +5%, or +1%. The term "substantially" is used to indicate that a result (e.g., measurement value) is close to a targeted value, where close can mean, for example, the result is within 80% of the value, within 90% of the value, within 95% of the value, or within 99% of the value.

Moreover, the terms top, bottom, over, under and the like in the description and the claims are used for descriptive purposes and not necessarily for describing relative positions. The terms so used are interchangeable under appropriate circumstances and the embodiments of the invention described herein can operate in other orientations than described or illustrated herein. The term "comprising", used in the claims, should not be interpreted as being restricted to the means listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B. Similarly, it is to be noticed that the term "coupled", also used in the description or claims, should not be interpreted as being restricted to direct connections only. Thus, the scope of the expression "a device A coupled to a device B" should not be limited to devices or systems wherein an output of device A is directly connected to an input of device B. It means that there exists a path between an output of A and an input of B which may be a path including other devices or means.

In order to describe the invention, we may refer to mapping of points from a first system of references to a second system of reference. More generally we may refer to the mapping of a first set of points to a second set of points.

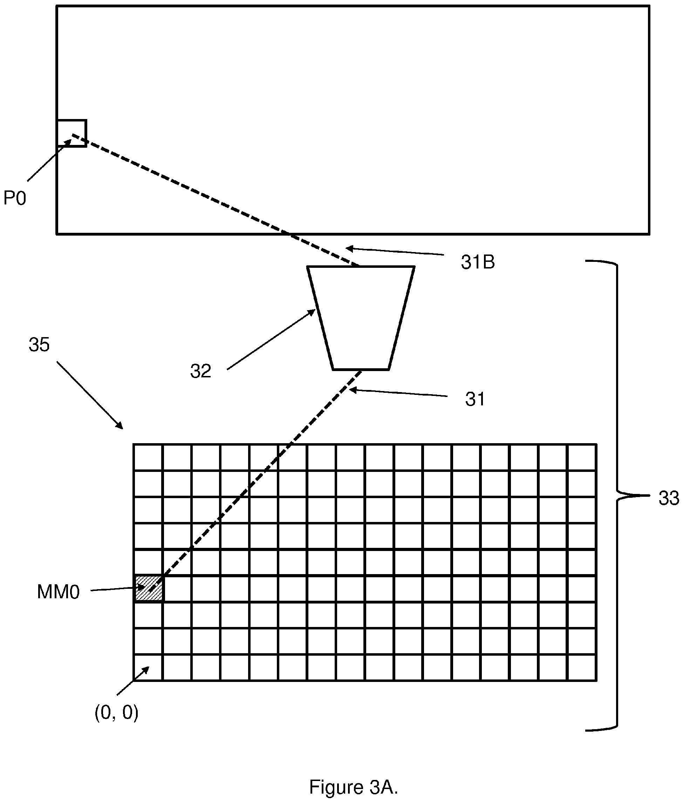

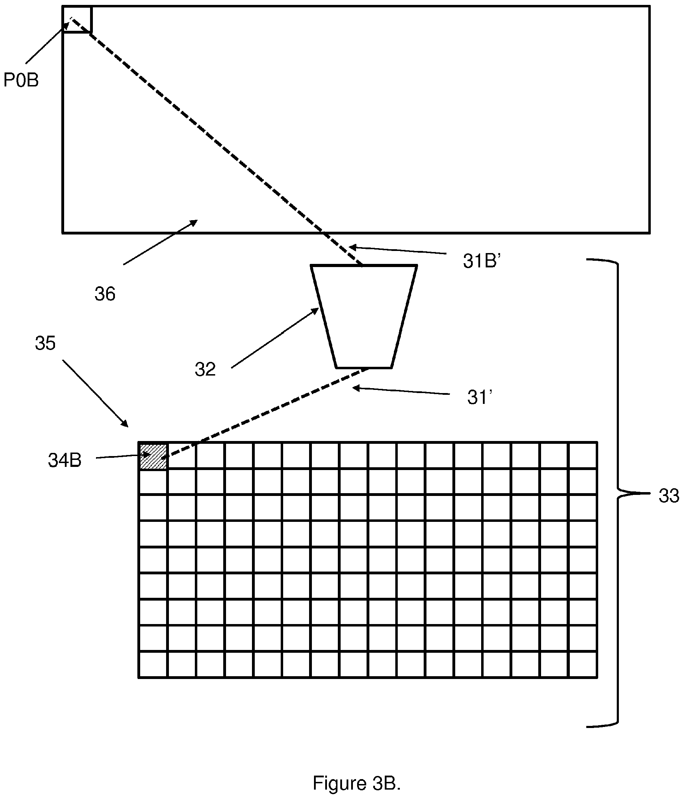

A first mapping is done between the pixels of a light valve (e.g. a digital micro-mirror light valve) and pixels on a projection screen as illustrated on figure 3A and 3B.

Figure 3A to 3B illustrate how a ray of light 31B intersects with a projection screen in front of a projector 33 in function of the state of e.g. the micro-mirrors on a reflective spatial light modulator 35. For the sake of simplicity, the spatial light modulator 35 is only 16 pixels wide and 9 pixels high. An active pixel is represented as a hashed square on the spatial light modulator 35, an inactive pixel is left blank. By aligning the projector and the screen as known in the art, one knows which pixel point of pixel P0 of the projection screen will be illuminated when a micro-mirror 34 of light valve 35 is activated.

As illustrated on figure 3A, when the micro-mirror 34 is activated, a ray of light (or more precisely a bundle of light rays) 31 is reflected by the micro-mirror towards the projection optics 32 and exits the projector 33 as 31B. The ray of light 31B strikes the projection screen 36 at point or pixel P0.

On figure 3B, another micro-mirror 34B is active (or ON), while all the others including 34 are inactive (or OFF). Light illuminating the light valve 35 is reflected micro-mirror 34B towards the projection optics 32 and exits the projector 33 as 31B.

The micro-mirrors are activated in function of image data. In simulators, image data can be generated in real-time by an image generator. For instance, in a gunnery trainer, an image generator can modify the succession of images projected on screen in function of past reactions of the gunner (e.g. to simulate evasive manoeuvers of a plane at which the gunner is shooting).

The mapping exists whether the display system is a rear projection system, a front projection system or an emissive display system (like e.g. a liquid crystal display, a LED display, a CRT display, a tiled display etc.).

The reactions of the gunner are evaluated based on what happens on screen (as e.g. is the case with the Waller Flexible Gunnery Trainer). Thanks to the mapping between the projection screen and the light valve, it is fairly easy to generate image data that will match a desired outcome on the projection screen. For instance, if the gunner concentrates fire in a first half of the projection screen, it may be of interest to simulate an evasive manoeuver by redirecting the images of a target to the other half of the screen. Since there is a one-to-one mapping between micro-mirrors of the light valve and points or pixels of the projection screen, the image generator will generate a sequence of images of a target by activating micro-mirrors in sequence from a first half of the light valve to the other half of the light valve.

In other words, knowing the desired coordinates (x, y) of the image of a target on the projection screen 36, it is possible to determine which micro-mirrors of the light valve must be activated.

Therefore, in the description of embodiments, we will discuss points and their coordinates in the space in front of the one or more projectors projecting images on a projection screen. If we refer to an image generator generating a point at coordinates (x,y) or (x, y, z), we will of course infer that the image generator generates image data to control the state of micro-mirrors of the light valve that will result in the corresponding point or pixels of the screen at coordinates (x,y) or (x, y, z) to be illuminated.

When stereoscopic or anaglyphic images are generated, it is the purpose to give a viewer the impression that e.g. a pixel or set of pixels "hang" in space at coordinates $(x_p, y_p, z_p)$.

When we will write that a virtual object (e.g. a point) is seen or perceived at a position $(x_p, y_p, z_p)$ by a viewer, it will mean that:

- A set of two images (a left eye image and a right eye image) is projected on the screen 36.

- The left eye image is a first pixel or point on the screen with coordinates (c1, c2) on the screen 36.

- The right eye image is a second pixel or point on the screen with coordinates (c3, c4) on the screen 36.

- A ray of light between the left eye of the viewer and the first pixel or point intersects a ray of light between the right eye of the viewer and the second pixel or point at a point with coordinates (x, y, z)

When we will consider ray of light being traced in space and in particular the equation of a straight line representing a ray of light, it will be easier to use Cartesian coordinates. Therefore, the coordinates (c1, c2) of a point on the screen 36 will more generally be expressed $(x_p, y_p, z_p)$ in a three-dimensional Cartesian system of coordinates even though the projection screens is a two dimensional space.

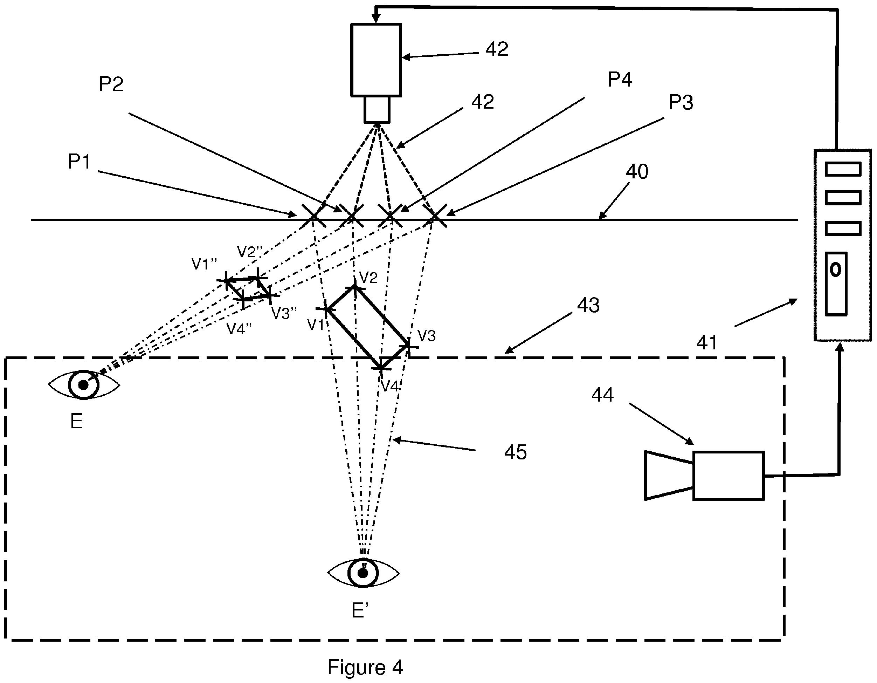

Figure 4 is a top view of a projection system according to the invention. The plane of figure 4 is perpendicular to a planar or quasi planar projection screen 40.

While the first example of embodiment describes a system where images are projected, the principle of the inventions applies equally to other types of displays like e.g. liquid crystal or plasma displays, LED displays, CRT displays etc...

Images generated by an image generator 41 are projected on the projection screen 40 by one or more projectors 42. The image generator 41 can be e,g, a computer with processing / computing means, graphical cards and communication interfaces as well as the necessary software, operating system etc. Image data generated by the image generator is fed to one or more projectors 42 that project images on the screen 40. When a display device is used, naturally the image generator feeds the image data to the display system of the display device. The projection system can be a rear projection system or a front projection system. Like most display system, the projection system has a sweet-spot (around E'). If the sweet spot is larger than a point, we will consider E' to be one point of the sweet spot. E' may then be chosen according to different criteria like symmetry, reduced computing power when implementing the invention as described further below etc...

One or more viewers or players like E and E' can move in an area 43 along the projection screen 40. The dimensions of the area 43 are e.g. of the same order of magnitude as the lateral dimensions of the projection surface 41. The area 43 is delimited by practical considerations as well as by a sensor 44 or means to detect the position of a user, that detects the position of one or more viewers E in the area 43. The sensor 44 (or means to detect the position of a user) can be built around e.g. a webcam or any other digital camera. The required data processing may be carried out by processing means built within the sensor 44 or by processing means of the image generator 41. The sensor 44 is configured to communicate with the image generator 41. The sensor 44 can be a Kinect® system. In certain embodiments of the invention, the sensor system could be based on other principles than image capture, such as positional tracking for example, by registering the exact position due to the recognition of pitch, yaw and roll and recording the translational movements as in head-mounted displays. The sensor system 44 can for instance be built around so-called head trackers, each head tracker determining the x, y, x position of the head as well as the orientation of the head (in particular the direction in which a viewer is looking). In other embodiments, the sensor system (means to detect the position of a user) can comprise a plurality of sensors, each sensor can then for example be dedicated to a specific user or to a region of area 43. Thus, the sensor system 44 can be based on inertial tracking, acoustic tracking, optical tracking, magnetic tracking or any combination thereof.

The image generator 41 can be e,g, a computer with processing / computing means, graphical cards and communication interfaces. Image data generated by the image generator is fed to one or more projectors 42 that project images on the screen 40. When the invention is used with a display device, the image data can be fed to the display system.

To explain the principle of the invention, we will limit ourselves to images of a polygon (in the example of figure 4 a rectangle with vertices V1, V2, V3, V4).

The use of polygons to represent 3D objects is common in Computer Graphics Animation and therefore, to explain the principle of the invention, we will limit ourselves to images of a polygon (in the example of figure 4 a rectangle with vertices V1, V2, V3, V4).

To render a virtual object {V1, V2, V3, V4} on the projection screen 40 when seen from the sweet spot E' requires determining the position of the images P1, P2, P3 and P4 of the vertices V1, V2, V3 and V4 respectively on the projection screen 40.

This can be done e.g. for the vertex V3 by determining the intersection P3 between the projection screen 40 and the straight line 45 determined by the points E' and the vertex V1.

Once the position of P3 is known, image data for the projector 42 can be generated by the image generator 41.

This ray tracing is done for the other vertices V1, V2 and V4 of the virtual object.

Figure 4 also illustrates how the images P1, P2, P3 and P4 of the virtual object will be perceived by a viewer positioned at E outside of the sweet spot. As expected, the viewer at E perceives the virtual object {V1, V2, V3, V4} at a different position and with an incorrect geometry. The object {V1", V2", V3", V4"}, having the projection P1, P2, P3, P4, as seen from position E, is distorted.

The inventors realized that it was possible to generate image data to be projected by the same projection system (with a sweet spot at E') that would allow a viewer at E to perceive the virtual object at the correct position and with the correct geometry by applying a correction to the virtual object. Before projection, the first virtual object {V1, V2, V3, V4} is distorted or mapped to a second virtual object {V1', V2', V3', V4'}. The second virtual object is then used to generate the image data that will be projected on the screen 40.

Figure 5 illustrates how the virtual object {V1', V2', V3', V4'} is determined in function of the virtual object {V1, V2, V3, V4} and the position of the viewer E outside of the sweet spot E'.

A straight line 50 that is determined by the position E and a vertex V4 of the first virtual object {V1, V2, V3, V4}, intersects the screen 40 at the point I. The vertex V4' of the second virtual object is somewhere along the straight line 51 determined by E' and the point I.

It occurred to the inventors that the vertex V4' has to be such that the triangles EIE' and V4IV4' are similar and therefore, the side EE' of the triangle EIE' is parallel to the side V4V4' of the triangle V4IV4'.

The theorem of Thales can therefore be applied to determine the position of V4' along the straight line 51:

$$(1) \quad \| IV4 \| / \| IE \| = \| IV4' \| / \| IE' \| = \| V4V4' \| / \| EE' \|$$

with

$\| IV4 \|$ = length of the straight line segment IV4

$\| IE \|$ = length of the straight line segment IE

$\| IV4' \|$ = length of the straight line segment IV4'

$\| IE' \|$ = length of the straight line segment IE'

$\| V4V4' \|$ = length of the straight line segment V4V4'

$\| EE' \|$ = length of the straight line segment EE'

By (1), we have:

$$\| IV4' \| = \| IE' \| * \| IV4 \| / \| IE \| \quad (2).$$

Knowing the position of E, E' and V4 it is thus possible to compute the position of a vertex V4' such that when displayed on the screen 40, the image of V4' will be perceived from E as if it were at V4.

The positions of vertices V3', V2', V1' are determined by the same method.

Once the position of the vertices of the second object {V1', V2', V3', V4'} are known, the image generator can generate the image to be projected on screen so that a viewer at position E will perceive the virtual object with the correct perception, as the first object {V1, V2, V3, V4}.

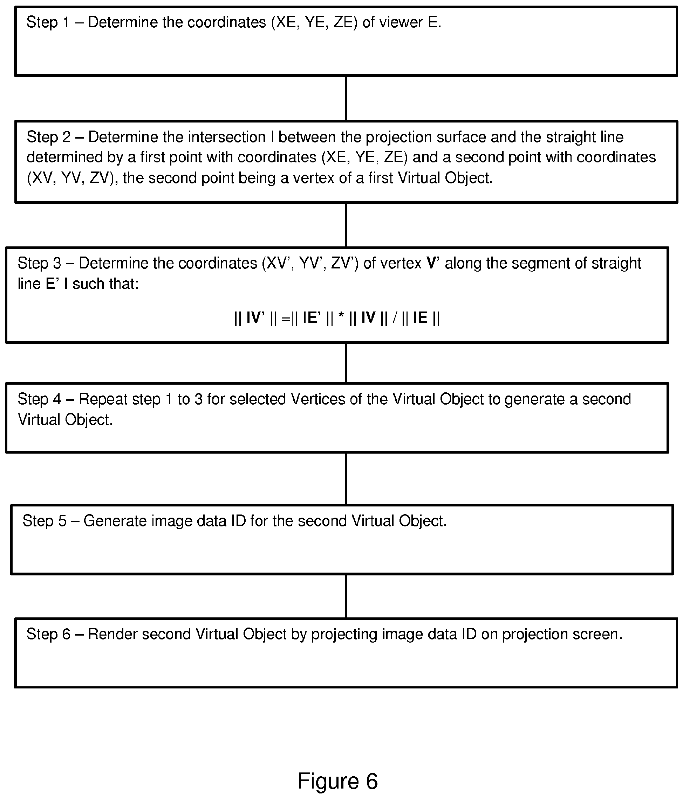

Figure 6 summarizes the steps or operations to be carried out to determine the image V' of a vertex V in function of the position E of a viewer, where V is a vertex of a first Virtual Object and V' is a vertex of a second Virtual Object.

In a first step, the sensor 44 determines the position XE, YE, ZE of the viewer E in a system of coordinate XYZ that is e.g. centered on the sweet spot E'.

In that system of reference, E' has coordinates (XE', YE', ZE') = (0, 0, 0) and E has coordinates (XE, YE, ZE)

In a second step, the intersection I between the projection surface (or the display) and a first straight line is determined. The straight line itself is determined by first point E with coordinates (XE, YE, ZE) and a second point V with coordinates (XV, YV, ZV), the second point being a vertex of the first Virtual Object.

The intersection I can e.g. be determined analytically.

The parametrical equations of the straight line passing by the first point E with coordinates (XE, YE, ZE) and second point V with coordinates (XV, YV, ZV) are:

$$(3) \quad X = Dx * t + XE$$

$$(4) \quad Y = Dy * t + YE$$

$$(5) \quad Z = Dz * t + ZE$$

Where t is a parameter (a real number) and

$$(6) \quad Dx = (XV - XE)$$

$$(7) \quad Dy = (YV - YE)$$

$$(8) \quad Dz = (ZV - ZE)$$

In the example of figures 4 and 6, the projection screen is coplanar with a plane with equation

$$(9) \quad Y = YP$$

The Y coordinate of the intersection point I is thus YI = YP.

The intersection point I between the straight line and the projection screen corresponds to the value ti of parameter t such that ti = (YP-YE) / Dy.

Injecting that value of ti in equations (3) and (5), we find the X and Z coordinates of the intersection point I:

$$(10) \quad XI = Dx * ti + XE$$

$$(11) \quad ZI = Dy * ti + ZE.$$

At the end of step 2, the coordinates (XI, YI, ZI) of the intersection point I are known.

In a third step, the coordinates of a vertex V' are determined.

The second vertex V' is on a second straight line determined by the intersection point I with coordinates (XI, YI, ZI) and the sweet spot E' (XE', YE', ZE'). It is at the intersection of the second straight line and a parallel to the line intersecting the sweet spot E' and the first point E and going through V.

The parametrical equations of the second straight line passing by the intersection point I with coordinates (XI, YI, ZI) and the sweet spot E' with coordinates (XE', YE', ZE') are:

$$(12) \quad X = Bx * t + XI$$

$$(13) \quad Y = By * t + YI$$

$$(14) \quad Z = Bz * t + ZI$$

Where t is a parameter (a real number) and

$$(15) \quad Bx = (XI - XE') / \| B \|$$

$$(16) \quad By = (YI - YE') / \| B \|$$

$$(17) \quad Bz = (ZI - ZE') / \| B \|$$

Where $B^2 = (XI - XE')^2 + (YI - YE')^2 + (ZI - ZE')^2$ and

$$\| B \| = \sqrt{B^2}$$

Using these expressions for Bx, By, Bz; we also have $Bx^2 + By^2 + Bz^2 = 1$ which will prove advantageous to simplify calculations.
Following the intercept theorem, the coordinates (XV', YV', ZV') of the vertex V' are such that

$$\| IV' \| = \| IE' \| * \| IV \| / \| IE \|$$

where

$$(18) \quad \| IV' \| = [(XI - XV')^2 + (YI - YV')^2 + (ZI - ZV')^2 ]^{\frac{1}{2}}$$

$$(19) \quad \| IE' \| = [(XI - XE')^2 + (YI - YE')^2 + (ZI - ZE')^2 ]^{\frac{1}{2}}$$

$$(20) \quad \| IE \| = [(XI - XE)^2 + (YI - YE)^2 + (ZI - ZE)^2 ]^{\frac{1}{2}}$$

$$(21) \quad \| IV \| = [(XI - XV)^2 + (YI - YV)^2 + (ZI - ZV)^2 ]^{\frac{1}{2}}$$

The coordinates of points I, V, E and E' being known, $\| IV' \|$ can be computed by using Equations (19), (20), (21) and (2).
Having $Bx^2 + By^2 + Bz^2 = 1$, the coordinates of V' are given by:

$$(22) \quad XV' = Bx * tv' + XI$$

$$(23) \quad YV' = By * tv' + YI$$

$$(24) \quad ZV' = Bz * tv' + ZI$$

Where

$$tv' = \| \, IV' \, \| = \| \, IE' \, \| * \| \, IV \, \| / \| \, IE \, \|$$

Indeed, we have by (22), (23) and (24):

$$(XV' - XI)^2 + (YV' - YI)^2 + (ZV' - ZI)^2 = (Bx^2 + By^2 + Bz^2) \, tv'^{\,2}$$

or, since $(Bx^2 + By^2 + Bz^2) = 1$

$$tv' = [(XI - XV')^2 + (YI - YV')^2 + (ZI - ZV')^2 \, ]^{\frac{1}{2}}$$

which is nothing else than $\| \, IV' \, \|$

In the particular choice made for Bx, By and Bz; we take for tv' the positive square root of [(XI - XV')² + (YI - YV')² + (ZI - ZV')² to find (XV', YV, ZV').

In a fourth step, we repeat steps 2 and 3 for each vertex V of the first virtual object that has been selected for rendering. Some vertices can be omitted if it appears that they should not be seen by the viewer at position E.

Once the vertices of the second virtual object are known, image data for projection on the projection screen can be generated in a fifth step.

In a sixth step, the image data is fed to the one or more projectors 42 and images of the second virtual object are projected on the screen 40, or displayed on a display system.

When images of the second virtual object are projected on the screen 40, a viewer at position E will thus perceive the first virtual object at the correct position and with the correct geometry. Depending on approximations that can be done during computations (e.g. rounding errors) and /or deviations from hypothesis (e.g. if the projection screen is not exactly planar and/or if the precision of the sensor 44 is limited etc.) the viewer at position E might not see the first virtual object at its exact position and with the exact geometry / perspective but the viewer will perceive the first virtual object at a position and with a geometry that are both closer to what would be the case without applying the principles of the invention.

Generating the image data for projection on the projection screen can be done in a number of ways. A straightforward example is now given.

A virtual object is determined by a mathematical model. The virtual object can e.g. be represented by a surface. If the virtual object is a cube, it has 6 square faces. Each of the six square faces is determined by a set of 4 vertices. In this example, 8 distinct vertices are enough to determine the position and orientation of the virtual object in a system of coordinates (e.g. an orthonormal system of coordinates X, Y, Z).

If images of the cube must be generated for a viewer at the sweet spot, the projection system of figure 4 can be calibrated so that image generation will require a simple geometrical projection of the cube onto the projection screen. This is illustrated on figure 4 for one face of the cube determined by vertices V1, V2, V3 and V4. If the virtual object must be perceived in the system of coordinates XYZ as determined by the coordinates of the vertices V1, V2, V3 and V4, one must project the images P1, P2, P3 and P4 of the vertices as constructed on figure 4: P1 is the intersection between the projection screen and the straight line determined by the point E' with coordinates (XE', YE', ZE') and the point V1 with coordinates (V1X, V1Y and V1Z), and so on for the other images P2, P3 and P4 of the vertices V2, V3 and V4.

If stereoscopic images are required, the method above can be repeated for the position of both eyes of a viewer, a left image must be determined for the left eye and a right image must be determined for the right eye.

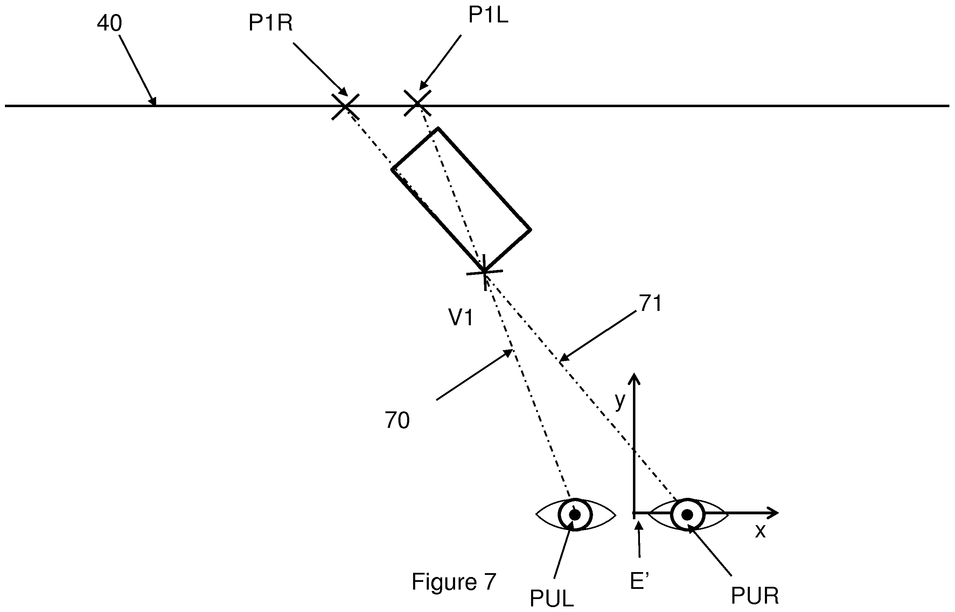

This is done as illustrated on figure 7 for a single vertex V1 with coordinates (V1X, V1Y, V1Z).

The left eye image is determined by tracing a straight line 70 between the left pupil PUL of a viewer at E' and the vertex V1. The intersection of the straight line 70 with the projection screen 40 is the required image P1L on screen 40.

The right eye image is determined by tracing a straight line 71 between the right pupil PUR of a viewer at E' and the vertex V. The intersection of the straight line 71 with the projection screen 40 is the required image P1R on screen 40.

When the images P1L and P1R are projected as stereoscopic images on the screen 40 according to the art, the viewer at E' will perceive the vertex V1 at the coordinates (V1X, V1Y, V1Z).

Since the pupil and the inter eye distance may vary from one individual to another, one can for example substitute for the purpose of computing the images, use a segment of line PU1 - PU2 of which the left extremity PU1 figures (the center of) the pupil of the left eye, the right extremity PU2 figures the center of the pupil of the right eye. The distance IED between the extremities PU1 and PU2 is taken as an average Inter Eye Distance (i.e. around 6 cm).

Considering that the eyes of a viewer at the sweet spot will be disposed symmetrically around the point E', the coordinates of PUL and PUR used to compute images are then:

$$XPUL = -0.5 \, IED * Cos \, \alpha, \quad YPUL = -0.5 \, IED * Sin \, \alpha \quad and \quad ZPUL = OFF1$$

$$XPUR = -0.5 \, IED * Cos \, \alpha, \quad YPUR = -0.5 \, IED * Sin \, \alpha \quad and \quad ZPUR = OFF1$$

Where $\alpha$ is the angle of the direction in which the viewer looks at the screen SC and the axis Y. OFF1 is the nominal height at which the eyes of a viewer are expected to be. For instance, if the simulator / display system is meant to be used with the viewer standing, OFF1 can be taken as the average height of an adult. OFF1 will be chosen in function of the application and the users.

Depending on the application, images can be computed with $\alpha = 0$. Alternatively, $\alpha$ the angle between the line of sight and e.g axis Y can be determined by the sensor 44 (e.g. with a Kinect system, an inertial head tracker or any of the other alternatives known from the art).

It is an advantage of the present invention that the second virtual object can be determined in the exact same way regardless of the fact that non-stereoscopic or stereoscopic images will be generated. 2D / non stereoscopic and stereoscopic images are calculated or determined based on the geometrical coordinates of vertices V. According to the invention, the geometrical coordinates of a first virtual object are modified in function of the position E (XE, YE, ZE) of a viewer to generate a second virtual object. The second virtual object is then used to generate image data. When images are projected on the screen 40 that corresponds to the image data, the viewer at the position E (XE, YE, ZE) will perceive the first virtual object at the position and with the perspective expected by the viewer at E.

The determination of the second virtual object can be done by a shader running on the image generator. The coordinates of the vertices of the first virtual object as well as the position E of the viewer outside of the sweet spot are fed to the shader who then generates the coordinates of the vertices of the second virtual objects.

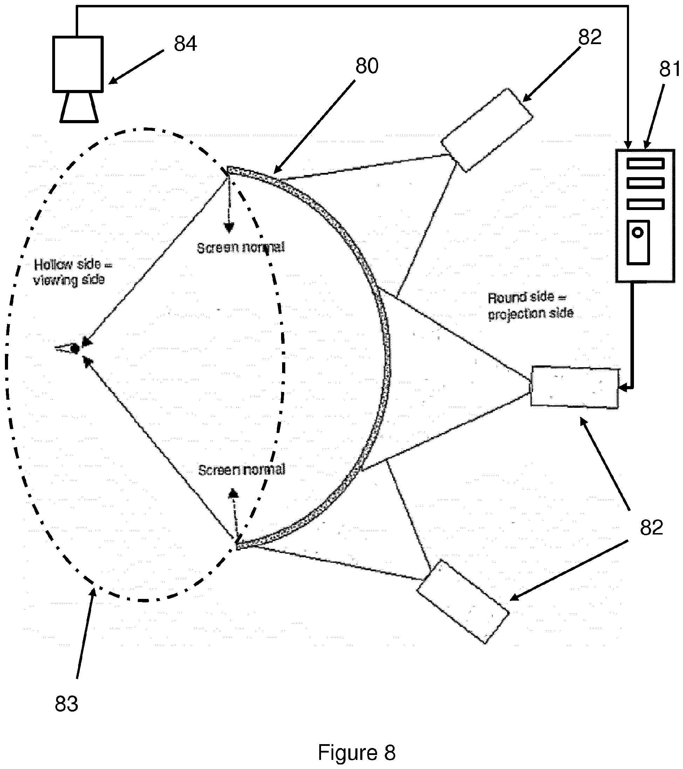

Figure 8 is a top view of a projection system according to another embodiment of the invention.

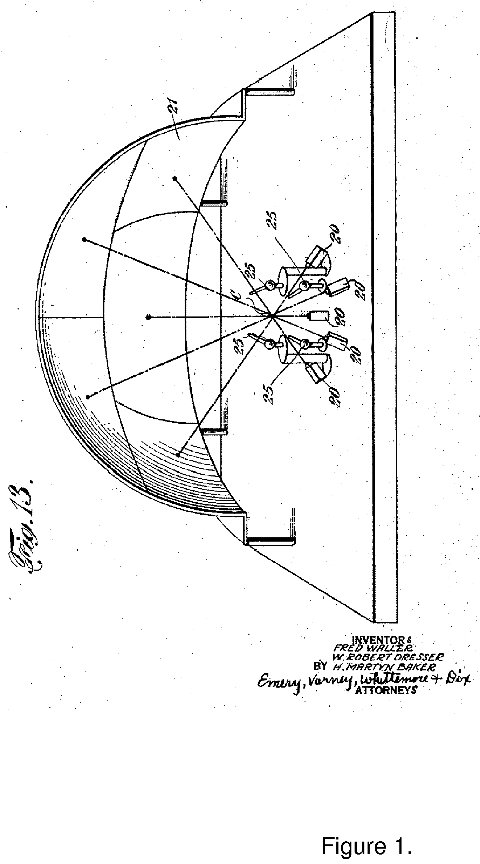

Images generated by an image generator 81 are projected on a dome 80 by one or more projectors 82. The surface of the dome is e.g. a spherical surface or part of a spherical surface or a cylindrical surface as on figure 8. Alternatively, the projection surface can be polyhedral (as in a cave display). If a projection system is used, it can be a rear projection system as in figure 8 or a front projection system as was exemplified in figure 1.

A viewer or player can move in an area 83 along the projection surface 80. The dimensions of the area 43 are e.g. of the same order of magnitude as the lateral dimensions of the projection surface (for instance the radius of the spherical projection screen 80).

A sensor 84 detects the position of one or more viewers in the area 83. The position of the one or more viewers in the area 83 is provided as sets of coordinates to the image generator 81. The image generator can be e,g, a computer with processing / computing means, graphical cards and communication interfaces. Image data generated by the image generator is fed to one or more projectors that project images on the screen 80.

Viewer can look at stereoscopic images projected on the screen by means of passive stereoscopic glasses. Images projected on the screen 80 can be a mix of 2D and stereoscopic images. Stereoscopic images of an object (e.g. a machine gun close to a viewer / player, a target) can be superimposed on 2D background images.

The background images can be e.g. a rendering of a seascape with the sea, the horizon, clouds in the sky, stars, the sun and /or the moon. The distance between e.g. a star or a cloud and the viewer being a lot larger than the distance between a first position and a second position of the viewer (or in other words, larger than the dimensions of the area 83), the perspective of the starry sky will remain unchanged if the viewer moves form the first position to the second position.

For a first viewer at the first position and a second viewer at the second position, the images of the seascape do not need to be modified. Both viewers can look at the same images of the background image projected on the projection screen without having the feeling that the perspective is wrong. The images of the background can be 2D images or stereoscopic images.

A virtual object can be a representation of e.g. a plane PL flying around as would be the case in a Gunnery Trainer. Other virtual objects can be rendered as well: a machine gun MG (close to the viewer / subject) as well as bullets BU being shot at the plane PL.

The perspective of a virtual object will change when the viewer looks at the virtual object from a first position POS1 and when the viewer looks from a second position POS2. This is particularly problematic for a virtual object whose coordinates are very close to a viewer outside of the sweet spot.

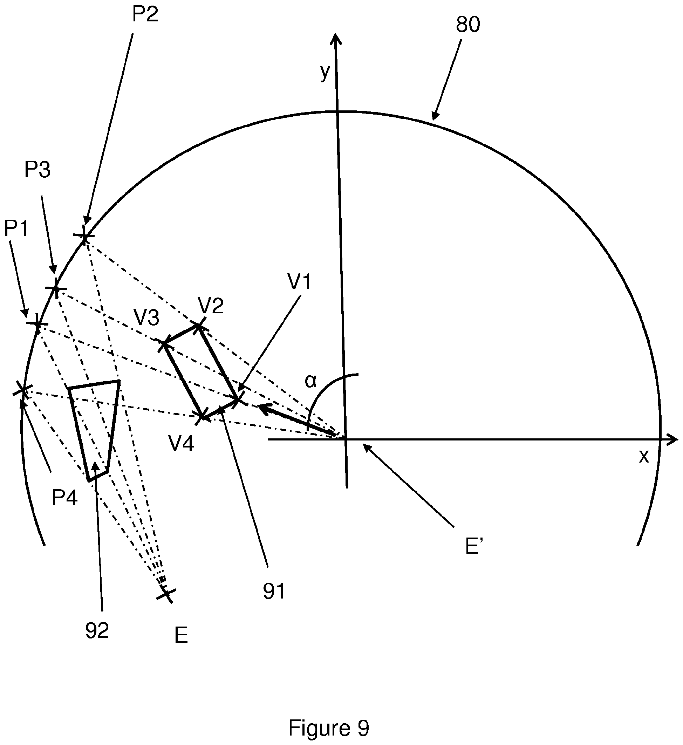

Let us take as an example a virtual gunnery trainer with two gunners as illustrated on figure 9. Figure 9 is a top view of the display system. The projection dome is figured by an arc of circle spanning an angle greater than 180º. A first gunner is at a position E outside of the sweet spot. A second gunner is positioned at the sweet spot E'. In a spherical dome as the one illustrated on figure 1 and figure 9, the sweet spot is often, if not always, at or around the geometrical center of the sphere of which the dome shaped projection screen is carved.

As was the case with the example of figure 4, the viewer at position E will not perceive the virtual object 91 with the same perspective as viewer E'.

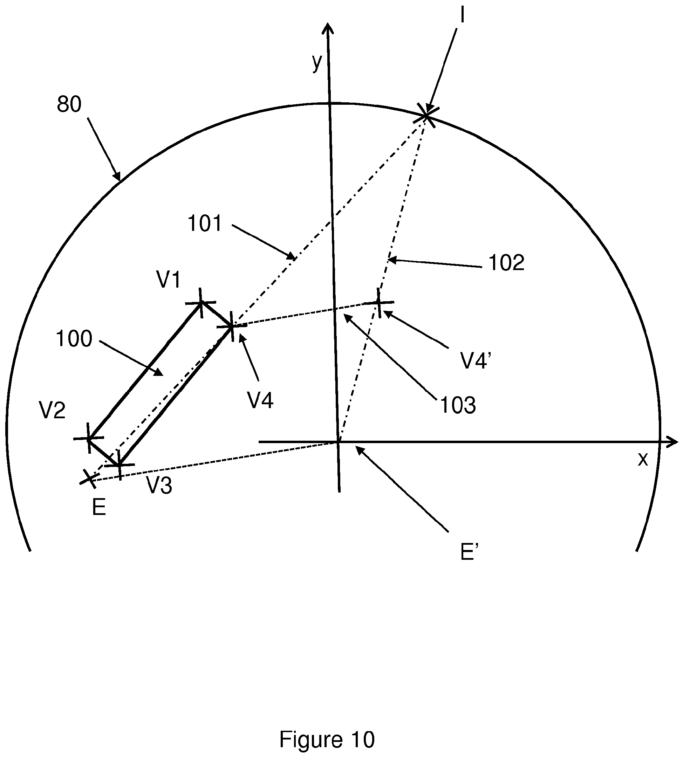

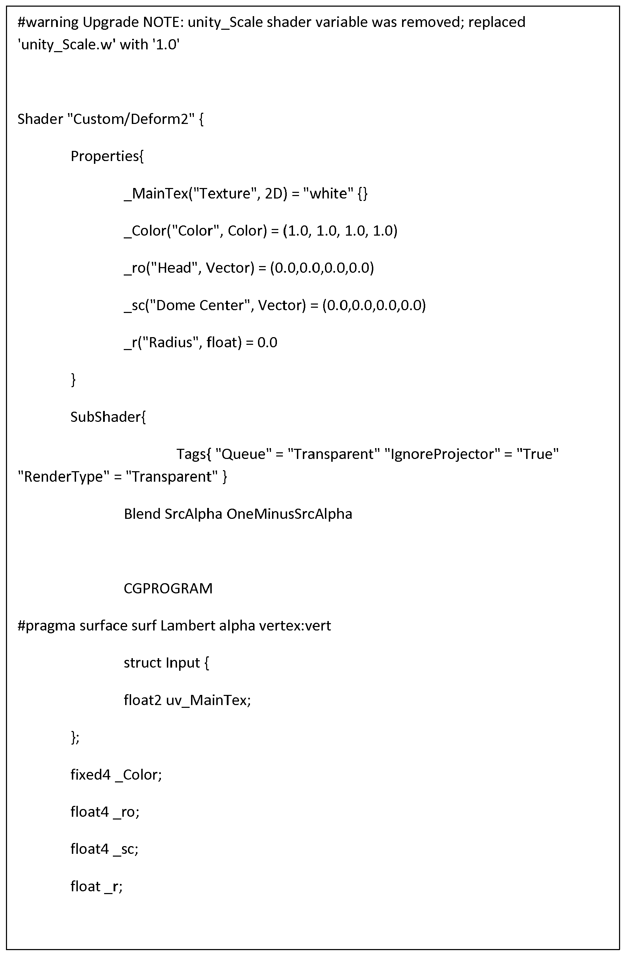

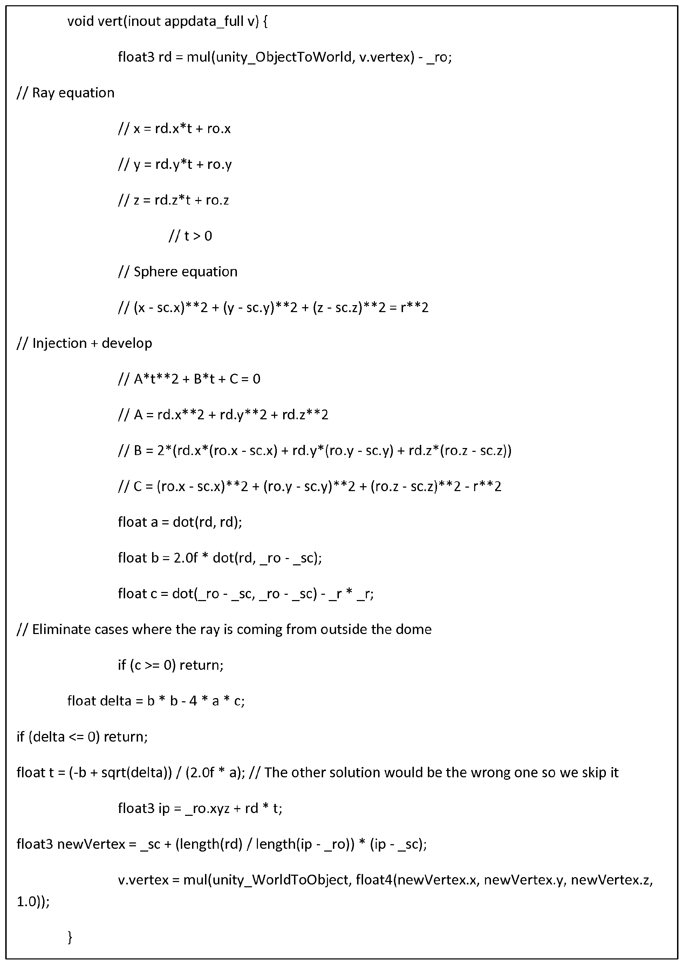

The method described earlier for a plane projection screen can be applied to correct for that perception problem in the projection dome. For instance, if a virtual gun must be perceived by the gunner at E as if it were in the hands of the gunner and with the correct perspective, the virtual gun must first be transformed before projection. Each vertex of the virtual gun must first be transformed according to the principle of the invention as illustrated on figure 10.

The principles of the method according to the present invention are illustrated by applying it to a single vertex V4 of a virtual object 100 that must be perceived by a viewer being in a position close to position E. A first straight line 101 is determined by points E and V4 and intersects the projection screen 80 at a point I.

A second straight line 102 is determined by the points I and E'.

A third straight line 103 is determined such that it intersects vertex V4 and is parallel to the direction EE'.

The vertex V4' is found at the intersection of the second straight line 102 and the third straight line 103.

The triangles EIE' and V4IV4' being similar, following the intercept theorem, the relations (1) apply and:

$$(1) \ \| \ IV4 \ \| \ / \ \| \ IE \ \| \ = \ \| \ IV4' \ \| \ / \ \| \ IE' \ \| \ = \ \| \ V4V4' \ \| \ / \ \| \ EE' \ \|$$

The image generator can compute the equations of the first straight line and determine the intersection point I with the projection screen. Once I is known, it can compute the equations of the second straight line and determine the vertex V4' such that the distance between I and V4' satisfies (1), i.e. $\| \ IV4' \ \| = \| \ IE' \ \| * \| \ IV4 \ \| \ / \| \ IE \ \|$.

The method is repeated for the other vertices V1, V2, V3 of the virtual object 100. The set of vertices V1', V2', V3' and V4' determine a second virtual object. To render the virtual gun with the correct perspective for a viewer at E, the image generator 81 uses the second virtual object to generate 2D or 3D images that are projected on the screen 80.

As was the case with the previous example, the computations required to determine the position of the vertices V1', V2', V3', V4' can be done by a shader.

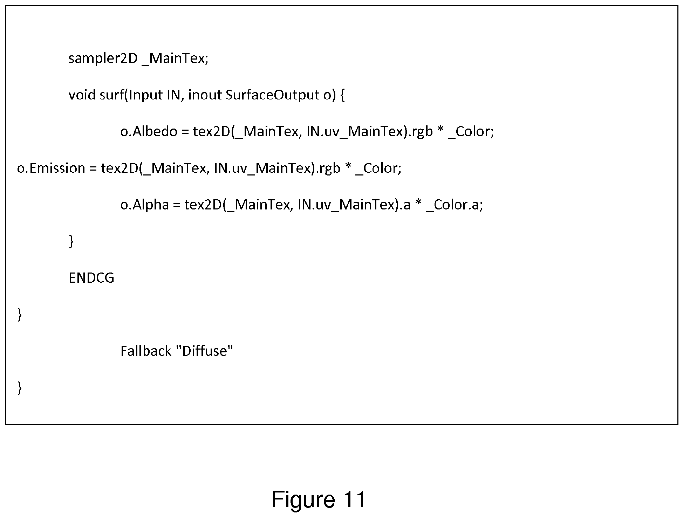

Figure 11 shows an example of shader written following the Shaderlab syntax (ShaderLab is a declarative language used to write shader files with the Unity editor (© 2018 Unity Technologies)).

There is yet another problem in immersive and interactive display systems that must be addressed: when a first viewer / player at position E and a second viewer / player at position E' interact with the same virtual object.

When two viewers at different position E and E' are looking and interacting with the same virtual object, it is not necessarily desirable to alter the image projected to improve the perspective of that object for viewers outside of the sweet spot. If the perspective was changed, then it is the second viewer at E' that would see the object with the wrong perspective.

Let us take as an example on figure 12 a virtual button 120 that can be activated by positioning one's hand at the position in space that corresponds to an activation zone around the coordinates of the (center of) the button 120. The means to detect the position of a user can also be configured to detect for example the hand of a user (or the foot for example) to allow interactions with virtual objects. The sensor 124 is thus in this embodiment configured to detect the position of the hand of each user.

A viewer at the sweet spot E' will position his / her hand 121 at the perceived position of the button 120 (e.g. XB, YB, ZB) at the intersection of the straight line joining the left pupil PUR and with the left eye image BL and the straight line joining the right pupil PUR and the right eye image BR. The sensor 124 checks whether or not a hand is in the vicinity of the point in space with coordinates (XB, YB, ZB). The image generator can e.g. compare the information sent by the sensor concerning the presence or absence of a hand in the vicinity of (XB, YB, ZB) and can e.g. trigger a change in image (like, but not limited to, a change in color of the image of the button 120). Depending on the sensor used and/or the signal processing that is done by the image generator, it is also possible to not only monitor the position of the hand (or other parts of a viewer) and determine e.g. the speed of the hand nearing the point (XB, YB, ZB). In video games, this could be used to e.g. evaluate the impact of the hand on a virtual object (like would be the case in e.g. a virtual boxing match).

A viewer at E, outside of the sweet spot, that wants to activate the button, will position his / her hand 123 at the perceived position 123 of the button 120 i.e. around the point 122 with coordinates (XPP, YPP, ZPP) and although the viewer at E expects a reaction, none will occur because his / her hand 122 was not in the right region of space around the point (XB, YB, ZB).

To avoid this, the positional information about the hand 123 of the viewer at E is modified in function of the coordinates of the hand 123 before being used to e.g. draw conclusions about interactions between the hand 123 of the viewer at E and the virtual object.

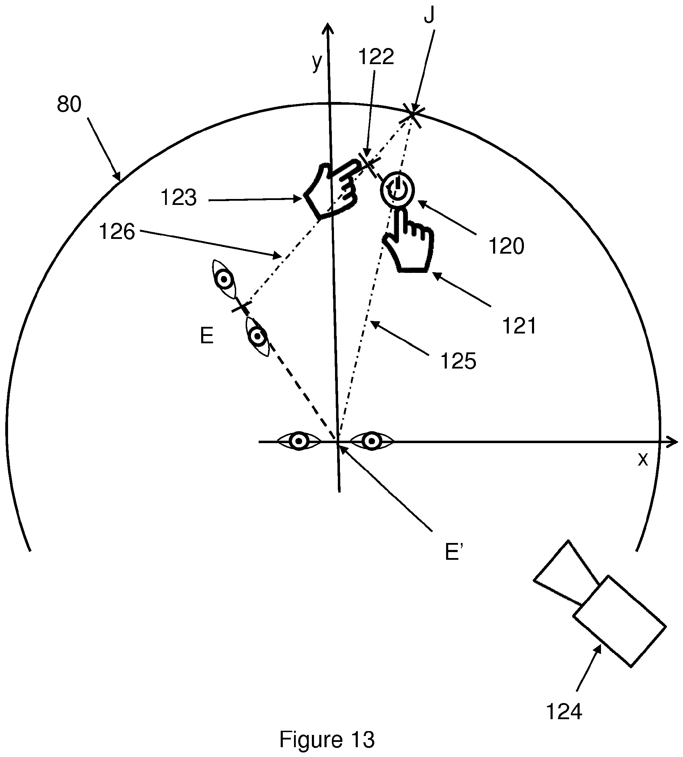

The transformation of coordinates applied to the coordinates of the hand 123 is illustrated on figure 13.

The present invention also provides a method to determine the interaction between a body member of a user position in a second position E, such as his hand, its position being determined by the sensor 124 and a virtual object which is displayed for a user at a first position E'.

In a first method according to the present invention, the coordinates (XPP, YPP, ZPP) at which the virtual button B is perceived by a viewer at E are evaluated based on the actual coordinates (XB, YB, ZB) of the virtual button B.

This can be done as illustrated on figure 13.

A first straight line 125 is determined by the point E' and the point B with coordinates (XB, YB, ZB). The first straight line 125 intersects the screen 80 at the point J.

The coordinates (XJ, YJ, ZJ) of the point J can be found by using the equations of the first straight line and the equation of the surface that corresponds to the screen.

A second straight line 126 is determined by the point J and E.

The point PP 123 with coordinates (XPP, YPP, ZPP) is on the second straight line and the distance ∥ J-PP ∥ between the point J and PP is given by the Thales theorem (intercept theorem):

$$\| \text{J-PP} \| = \| \text{JE} \| * \| \text{JB}\| / \|\text{JE'}\|.$$

Where ∥ JB∥ is the distance between the point J and the point B (XB, YB, ZB);

∥JE' ∥ is the distance between the point J and the point E';

∥JE ∥ is the distance between the point J and the point E.

As was done previously, the coordinates of the point PP can be calculated once the coordinates of E, E', B and J are known.

Once the coordinates of PP are known, interactions between the virtual object at B with (the hand of) the viewer at E will be evaluated not by comparing the coordinates of B with the coordinates of the (hand of) the viewer at E but by comparing the coordinates of PP with the coordinates of the hand.

Alternatively, the coordinates of the hand of viewer E are transformed and compared to (XB, YB, ZB).

This time, the first straight line is drawn through E and (a point of) the hand H. That straight line intersects the projection surface at J. A second straight line is drawn from J to E'.

The coordinates of the point V (corrected point of the hand H) on the second straight line JE' with which to compare the coordinates of the point B are such that ∥ JV ∥ = ∥ **JE'** ∥ * ∥ **JH** ∥ / ∥ **JE** ∥.

When interaction has been determined, the user can interact with the virtual object.

The correction described above can be applied at the level of the image generator or at the level of the sensor. The correction can also be applied with the use of a shader, as described above in reference to Figure 11.

In another aspect of the invention, once the perspective of an object has been corrected, rendering of stereoscopic images on a spherical display (i.e. panoramic display) can be done e.g. as taught in the white paper "Rendering Omni-directional Stereo Content" from Google inc.

In accordance with another embodiment of the present invention software may be implemented as a computer program product which has been compiled for a processing engine to carry out any of the methods of the present invention or is compiled to execute in an interpretative virtual machine such as the Java™ Virtual Machine. A display device may comprise logic encoded in media for performing any step of the steps of the methods according to the present invention. Logic may comprise software encoded in a disk or other computer-readable medium and/or instructions encoded in an application specific integrated circuit (ASIC), field programmable gate array (FPGA), or other processor or hardware. A display will also include a CPU and/a GPU and memory, the CPU and/or GPU having a processing engine able to execute software of the present invention.

The computer program product may be stored on a non-transitory signal storage medium such as an optical disk (CD-ROM or DVD-ROM), a digital magnetic tape, a magnetic disk, a solid state memory such as a USB flash memory, a ROM, etc.

The software can be embodied in a computer program product adapted to carry out the following functions when the software is loaded onto the image generator and executed on one or more processing engines such as microprocessors, ASIC's, FPGA's etc.:

- determining the second position E of the user with the means to detect the position of a user,

- for each vertex V of the first virtual object,

  ◦ determining the intersection I between the display device or projection surface and the straight line intersecting position E and vertex V,

  ◦ determining the vertex V' of the second virtual object, along the straight line intersecting position E' and intersection I, such that using the intercept theorem, .

$$\| IV' \| = \| IE' \| * \| IV \| / \| IE \|.$$

- Generating image data for the second virtual object,
- Rendering the second virtual object by projecting the image data on the projection screen or by displaying it on the display device.

The software can be embodied in a computer program product adapted to carry out the following functions when the software is loaded onto the image generator or the sensor (means to detect the position of a user) and executed on one or more processing engines such as microprocessors, ASIC's, FPGA's etc.:

- Determining with the means to detect the position of a user 124 the position of the body member 123 of the user at position E,

- determining the intersection J between the display device or projection surface and the straight line intersecting position E and virtual object B,

  (1) determining a second position PP of the virtual object B, as seen by the user in E, as being along the straight line intersecting position E and intersection J, and on the line parallel to EE' and intersecting the position B, such that using the intercept theorem: $\| J\text{-}PP \| = \| JE \| * \| JB \| / \| JE' \|$,

  (2) or determining a second position V of the body member H of the user, such that the coordinates of the point V are such that $\| JV \| = \| JE' \| * \| JH \| / \| JE \|$.

- For (1), comparing the second position PP of the virtual object with the position of the body member of the user at position E to determine if there is an interaction between the virtual object at B with the body member of the viewer at E,

- For (2), comparing the second position V of the body member with the position of the virtual object at B to determine if there is an interaction between the virtual object at B with the body member of the viewer at E.

The software mentioned above can be stored on a non-transitory signal storage medium, such as an optical disk (CD-ROM or DVD-ROM); a magnetic tape, a magnetic disk, a ROM, or a solid state memory such as a USB flash memory or similar.

While the invention has been described hereinabove with reference to specific embodiments, this was done to clarify and not to limit the invention. The skilled person will appreciate that various modifications and different combinations of disclosed features are possible without departing from the scope of the invention.

**Claims**

1. A method for generating a second virtual object (V') from a first virtual object (V), said second virtual object being displayed on a display device or projected on a projection screen, the method being executed by an image generator in a projection system or in a display system further comprising means to detect the position of a user, wherein the first virtual object is determined for a user in a first known position (E'), and wherein the second virtual object is determined for a user in a second position (E), different from the first known position, the method comprising the steps of

   - determining the second position (E) of the user with the means to detect the position of a user (44),
   - for each vertex V of the first virtual object,

EP 3 557 533 A1

○ determining the intersection I between the display device or projection surface (40) and the straight line intersecting position E and vertex V,
○ determining the vertex V' of the second virtual object, along the straight line intersecting position E' and intersection I, such that using the intercept theorem,

$$\| \ IV' \ \| = \| \ IE' \ \| \ * \ \| \ IV \ \| \ / \ \| \ IE \ \|$$

- generating image data for the second virtual object,
- rendering the second virtual object by projecting the image data on the projection screen or by displaying it on the display device.

2. Method according to claim 1, wherein said the first position (E') is a sweet spot of the projection system or display system.

3. Method according to claims 1 or 2, wherein the method is applied

- for a second position EL which corresponds to the position of the left eye of a user and
- a third position ER which corresponds to the position of the right eye of a user,

such that the method generates a stereoscopic image of the second virtual object.

4. Method according to any of the preceding claims, wherein the determination of the second virtual object is performed with a shader, said shader receiveing the coordinates of the first virtual object and the second position E of the user.

5. Method according to any of the preceding claims, wherein the second virtual object is displayed over a background image, said background image being identical for all positions of a user.

6. Method according to any of the preceding claims, wherein the projection screen or the display device is flat, cylindrical, polyhedral or is a dome or a portion of a dome.

7. A method for determining interaction between a user and a virtual object,
said virtual object being displayed on a display device or projected on a projection screen, the method being applied by an image generator in a projection system or in a display system comprising means to detect the position of a user, the user being in a second position E and the virtual object B being displayed for a person in a first position E', the user at position E interacting with the virtual object with a body member (123, PP), the method comprising the steps of

- Determining with the means to detect the position of a user 124 the position of the body member 123 of the user at position E,
- determining the intersection J between the display device or projection surface and the straight-line intersecting position E and virtual object B,

(1) determining a second position PP of the virtual object B, as seen by the user in E, as being along the straight-line intersecting position E and intersection J, and on the line parallel to EE' and intersecting the position B, such that using the intercept theorem: $\| \ J\text{-}PP \ \| = \| \ JE \ \| \ * \ \| \ JB\| \ / \ \|JE'\|$,
(2) or determining a second position V of the body member H of the user, such that the coordinates of the point V are $\| \ JV \ \| = \| \ JE' \ \| \ * \ \| \ JH \ \| \ / \ \| \ JE \ \|$.

- for (1), comparing the second position PP of the virtual object with the position of the body member of the user at position E to determine if there is an interaction between the virtual object at B with the body member of the viewer at E,
- for (2), comparing the second position V of the body member with the position of the virtual object at B to determine if there is an interaction between the virtual object at B with the body member of the viewer at E.

8. Method according to claim 7, wherein said the first position (E') is a sweet spot of the projection system or display system.

9. Method according to claim 7 or 8, wherein the projection screen or the display device is flat, cylindrical, polyhedral or is a dome or a portion of a dome.

10. Method according to any of claims 7 to 9, wherein the determination of the second position PP of the virtual object B or the second position V of the body member H is performed with a shader, said shader receiveing the coordinates of the first virtual object B and the second position E of the user.

11. A projection system comprising at least one projector, means to detect the position of a user, and an image generator configured to execute the steps of the method of claim 1 and/or claim 7.

12. A display system comprising at least one display, means to detect the position of a user, and an image generator configured to execute the steps of the method of claim 1 and/or claim 7.

13. A computer program product comprising software which when executed on one or more processing engines, performs any of the methods of claims 1 to 10.

14. A computer-readable medium having stored thereon the computer program of claim 13.

Figure 1.

*Fig. 6*

CONTROLLER

IMAGE
GENERATOR

Figure 2

P0

31B

35

32

31

MM0

33

(0, 0)

Figure 3A.

Figure 3B.

Figure 4

Figure 5

Step 1 – Determine the coordinates (XE, YE, ZE) of viewer E.

Step 2 – Determine the intersection I between the projection surface and the straight line determined by a first point with coordinates (XE, YE, ZE) and a second point with coordinates (XV, YV, ZV), the second point being a vertex of a first Virtual Object.

Step 3 – Determine the coordinates (XV', YV', ZV') of vertex **V'** along the segment of straight line E' I such that:

$$|| \mathbf{IV'} || = || \mathbf{IE'} || * || \mathbf{IV} || / || \mathbf{IE} ||$$

Step 4 – Repeat step 1 to 3 for selected Vertices of the Virtual Object to generate a second Virtual Object.

Step 5 – Generate image data ID for the second Virtual Object.

Step 6 – Render second Virtual Object by projecting image data ID on projection screen.

Figure 6

EP 3 557 533 A1

40

P1R

P1L

V1

71

70

y

x

E'

Figure 7

PUL

PUR

Figure 8

Figure 9

Figure 10

```
#warning Upgrade NOTE: unity_Scale shader variable was removed; replaced
'unity_Scale.w' with '1.0'


Shader "Custom/Deform2" {

        Properties{

                _MainTex("Texture", 2D) = "white" {}

                _Color("Color", Color) = (1.0, 1.0, 1.0, 1.0)

                _ro("Head", Vector) = (0.0,0.0,0.0,0.0)

                _sc("Dome Center", Vector) = (0.0,0.0,0.0,0.0)

                _r("Radius", float) = 0.0

        }

        SubShader{

                        Tags{ "Queue" = "Transparent" "IgnoreProjector" = "True"
"RenderType" = "Transparent" }

                Blend SrcAlpha OneMinusSrcAlpha


                CGPROGRAM
#pragma surface surf Lambert alpha vertex:vert

                struct Input {

                float2 uv_MainTex;

        };

        fixed4 _Color;

        float4 _ro;

        float4 _sc;

        float _r;
```

```
        void vert(inout appdata_full v) {

                float3 rd = mul(unity_ObjectToWorld, v.vertex) - _ro;

// Ray equation

                // x = rd.x*t + ro.x

                // y = rd.y*t + ro.y

                // z = rd.z*t + ro.z

                    // t > 0

                // Sphere equation

                // (x - sc.x)**2 + (y - sc.y)**2 + (z - sc.z)**2 = r**2

// Injection + develop

                // A*t**2 + B*t + C = 0

                // A = rd.x**2 + rd.y**2 + rd.z**2

                // B = 2*(rd.x*(ro.x - sc.x) + rd.y*(ro.y - sc.y) + rd.z*(ro.z - sc.z))

                // C = (ro.x - sc.x)**2 + (ro.y - sc.y)**2 + (ro.z - sc.z)**2 - r**2

                float a = dot(rd, rd);

                float b = 2.0f * dot(rd, _ro - _sc);

                float c = dot(_ro - _sc, _ro - _sc) - _r * _r;

// Eliminate cases where the ray is coming from outside the dome

                if (c >= 0) return;

        float delta = b * b - 4 * a * c;

if (delta <= 0) return;

float t = (-b + sqrt(delta)) / (2.0f * a); // The other solution would be the wrong one so we skip it

                float3 ip = _ro.xyz + rd * t;

float3 newVertex = _sc + (length(rd) / length(ip - _ro)) * (ip - _sc);

                v.vertex = mul(unity_WorldToObject, float4(newVertex.x, newVertex.y, newVertex.z,
1.0));

        }
```

```
        sampler2D _MainTex;

        void surf(Input IN, inout SurfaceOutput o) {

                o.Albedo = tex2D(_MainTex, IN.uv_MainTex).rgb * _Color;

o.Emission = tex2D(_MainTex, IN.uv_MainTex).rgb * _Color;

                o.Alpha = tex2D(_MainTex, IN.uv_MainTex).a * _Color.a;

        }

        ENDCG

}

                Fallback "Diffuse"

}
```

Figure 11

Figure 12

Figure 13

Europäisches Patentamt

European Patent Office

Office européen des brevets

# EUROPEAN SEARCH REPORT

Application Number

EP 18 16 8625

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2013/088390 A1 (UNIV DEGLI STUDI GENOVA [IT]) 20 June 2013 (2013-06-20) * abstract * ----- | 1-14 | INV. G06T15/20 G06T19/00 |
| A | US 2006/221071 A1 (VESELY MICHAEL A [US] ET AL) 5 October 2006 (2006-10-05) * abstract * ----- | 1-14 | |
| A | HANSFORD D ET AL: "Anamorphic 3D geometry", COMPUTING ; ARCHIVES FOR SCIENTIFIC COMPUTING, SPRINGER-VERLAG, VI, vol. 79, no. 2-4, 7 March 2007 (2007-03-07), pages 211-223, XP019519237, ISSN: 1436-5057, DOI: 10.1007/S00607-006-0199-6 * abstract * ----- | 1-14 | |

| TECHNICAL FIELDS SEARCHED (IPC) |
|---|
| G06T |

The present search report has been drawn up for all claims

| Place of search | Date of completion of the search | Examiner |
|---|---|---|
| Berlin | 24 September 2018 | Gao, Miao |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 16 8625

This annex lists the patent family members relating to the patent documents cited in the above-mentioned European search report.
The members are as contained in the European Patent Office EDP file on
The European Patent Office is in no way liable for these particulars which are merely given for the purpose of information.

24-09-2018

| Patent document cited in search report | Publication date | Patent family member(s) | Publication date |
|---|---|---|---|
| WO 2013088390 A1 | 20-06-2013 | EP 2792148 A1<br>US 2014327613 A1<br>WO 2013088390 A1 | 22-10-2014<br>06-11-2014<br>20-06-2013 |
| US 2006221071 A1 | 05-10-2006 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2406574 A
- US 5137450 A
- US 7832869 B